Europäisches Patentamt

European Patent Office

Office européen des brevets

(11) Publication number: **0 381 281**
**A2**

(12) **EUROPEAN PATENT APPLICATION**

(21) Application number: **90200196.5**

(22) Date of filing: **29.01.90**

(51) Int. Cl.5: **D01F 6/60**

(30) Priority: **01.02.89 JP 24499/89**

(43) Date of publication of application:
**08.08.90 Bulletin 90/32**

(84) Designated Contracting States:
**AT BE CH DE DK ES FR GB IT LI NL SE**

(71) Applicant: **STAMICARBON B.V.**
**Mijnweg 1**
**NL-6167 AC Geleen(NL)**

(72) Inventor: **Takahashi, Toshiro**
**c/o Chuo-kenkyusho Unitika Ltd. 23, Uji**
**Kozakura**
**Uji-Shi, Kyoto-fu(JP)**
Inventor: **Kitahara, Takeshi**
**c/o Chuo-kenkyusho Unitika Ltd. 23, Uji**
**Kozakura**
**Uji-Shi, Kyoto-fu(JP)**
Inventor: **Nishikawa, Kinsaku**
**c/o Chuo-kenkyusho Unitika Ltd. 23, Uji**
**Kozakura**
**Uji-Shi, Kyoto-fu(JP)**
Inventor: **Kiriyama, Syun-ichi**
**c/o Chuo-kenkyusho Unitika Ltd. 23, Uji**
**Kozakura**
**Uji-Shi, Kyoto-fu(JP)**

(54) **Polyamide fibre for v-belt reinforcement cord.**

(57) The invention relates to a polyamide 4.6 fibre for V-belt reinforcement having the following characteristics:

    a. Intrinsic viscosity (dl/g): at least 1.40

    b. Tenacity (g/d): at least 8.0

    c. Elongation at break (%): at least 12

    d. Elongation at specified load (intermediate elongation) of 3.5 g/d (%): not more than 9.5

    e. Dry thermal shrinkage (%): not more than 5

    f. Thermal contractive stress (g/d): at least 0.08 and the cord, obtained therefrom, after dipping satisfies:

    g-1 Tenacity (g/d): at least 7.5

    g-2 Elongation at break (%): at least 10

    g-3 Dry thermal shrinkage (%): at most 2.5

    g-4 Thermal contractive stress (g/d): at least 0.20 and the production thereof.

## POLYAMIDE FIBRE FOR V-BELT REINFORCEMENT CORD

The present invention relates to a polyamide fibre for V-belt reinforcement.

The reinforcement of rubber V-belts should show a combination of specific properties such as high strength, high modulus, low dry thermal shrinkage, high thermal contractive stress, high heat resistance, strong adhesion on rubber etc. due to the need for high load transmission efficiency, resistance to thermal fatigue at high loads etc. Among these numerous requirements high strength, low dry thermal shrinkage and high thermal contractive stress are regarded as most important.
High strength is necessary for performance under high load and for a good fatigue behavior; low dry thermal shrinkage is necessary in the production process of the V-belt to ensure dimensional stability as well during use of the V-belt under running conditions under excessive load during which frictional heat is produced and in case considerable dry shrinkage should occur deflection of the pully shaft and/or damage to the bearings might occur. High contractive stress on the other hand is important for an efficient transmission of a specific load, while maintaining a specified tension in the V-belt.

In general, the fiber material in a V-belt reinforcement is in the form of a cord, which has been given a treatment, (dipping process), to improve the adhesion on the rubber. Therefore the physical properties of the dipped cord are essential in the judgement of different fibre materials for application as a reinforcement of rubber V-belts.

In the state of the art the following materials have been used in practice for fibre in rubber V-belt reinforcement. All these materials show however at least one shortcoming in the essential physical properties. Rayon cord has for instance insufficient strength, and nylon 6 and nylon 6.6 cords show a high dry thermal shrinkage and therefore low dimensinal stability. Polyester cord (polyethyleneterephthalate) is finding the widest use, due to its relatively high performance. However improvement of the dry thermal shrinkage of the dipped cord results in a reduction of the contractive stress. In case one wishes to improve the contractive stress by increasing the stretching ratios the dry thermal shrinkage detoriates at the same time. This phenomenon is very apparant in V-belts for the electric power generators in automotive applications, which generate a shrieking noise when the engine is started. Different methods to improve these properties have been proposed recently. JP-A-58-13652 and 62-62910 disclose a method to improve the dry thermal shrinkage and the contractive stress by raising the double refractive index of undrawn filament by quenching while spinning at high speed. However this method is applicable only in a limited number of production processes. JP-A-63-152437 discloses a method to improve the contractive stress by drawing under specific conditions, however this method shows the shortcoming mentioned above.

Notwithstanding the many efforts it has until yet not been possible to find a reinforcing cord for rubber V-belt that fullfills, after dipping for good adhesion, the physical properties of high strength and low dry thermal shrinkage together with high contraction stress.

It is therefore the object of the present invention to provide a polymer fibre for rubber V-belt reinforcement which has high strength and fulfills the basic requirements of dimensional stability, high contractive stress, fatigue resistance etc. and a process for the production thereof. The polymer fibre for rubber V-belt reinforcement of the present invention is characterized in that it consists of polyamide 4.6 or a polyamide having tetramethylene adipamide as its main units and satisfies this following characteristics:

    a. Intrinsic viscosity (dl/g): at least 1.40
    b. Tenacity (g/d): at least 8.0
    c. Elongation at break (%): at least 12
    d. Elongation at specified load (intermediate elongation) of 3.5 g/d (%): not more than 9.5
    e. Dry thermal shrinkage (%): not more than 5
    f. Thermal contractive stress (g/d): at least 0.08 and the cord, obtained therefrom, after dipping satisfies:
    g-1 Tenacity (g/d): at least 7.5
    g-2 Elongation at break (%): at least 10
    g-3 Dry thermal shrinkage (%): at most 2.5
    g-4 Thermal contractive stress (g/d): at least 0.20.

JP-A-76914 discloses some properties of polyamide 4.6 fibre and mentions also the possibility of its application of rubber material reinforcement. No detailed description or evaluation is given nor is any relation given between the filament performance and the performance of the dipped cord, which properties are decisive for its performance in practical use.
Particularly, the relationship between the filaments dry thermal shrinkage and thermal contractive stress is determined by the microstructure of the material, depending on the manufacturing method, so that they are not always correlated in an identical way.
JP-A-5988942 discloses polyamide 4.6 fiber for tire cord application. In case of tire cord applications the smaller the thermal contractive stress of the dipped cord is, the better is its performance regarded. However these fibres are inadequate for V-belt reinforcement, which requires a high contractive stress of the fiber. It is the merit of the inventors to have succeeded in finding a fibre having the combination of properties necessary for rubber reinforcement but with high contractive stress.

The polyamide composing the fibre of the present invention contains at least 90% by weight tetramethylene adipamide units. It may be 46 homopolymer or contain one or more other components for instance (poly)caprolactam, (poly)-hexamethylene adipamide, (poly)-hexamethylene sebacamide, which is or are copolymerized or blended therewith. The proportion of the copolymerized or blended component(s) should be not more than 10 % (wt), at higher contents it is not possible to obtain the characteristics listed above.

If desired other compounds can be added, for instance thermal stabilizers, for example copper compounds, alkali and/or earth alkali halides, amine compounds, phenol compounds, sulfur compounds and mixtures thereof.

The fibre of the invention should have an intrinsic viscosity (measured in a 1 gram solution in 100 ml 96 % (wt) sulfuric acid at 25°C) of at least 1.40 dl/g, preferably at least 1.45 dl/g; at lower values tenacity and fatigue behaviour will be insufficient.

Tenacity is measured according to JIS L-1017. The tenacity should be at least 8.0 g/d, preferably at least 8.5 g/d.

The elongation at break is measured according to JIS L 1017 and should be at least 12%, preferably at least 14%. If this value is smaller than 12%, the elongation at break for the dipped cord will be too small resulting in insufficient fatigue behaviours.

The elongation at specific load (intermediate elongation) designates the elongation under a load of 3.5 g/d. It should be 9.5 % or less. If this value is more than 9.5 % the elongation of the dipped cord will be too high, resulting in deformation and reduced tension of the stretched V-belt.

The dry thermal shrinkage (%) = $(l_0-l_1)/l_0 \times 100$ in which $l_0$ is the length, under a load of 0.05 g/d, of a conditioned, unstretched, sample of the fibre (20°C, 65% relative humidity during 24 hrs.) and $l_1$ is the length of an identical sample after heat treatment for 15 minutes in unstretched state in an oven at 180°C, the length being measured after conditioning during 4 hrs. at 20°C and 65% RH. The dry thermal shrinkage should be at most 5%, preferably at most 4.5%. If this requirement is not fulfilled the dry thermal shrinkage of the dipped cord will be more than 2.5%, leading to insufficient dimensional stability.

The thermal contractive stress is measured at a heating rate of 300°C/180 sec. in a thermal stress tester, Type KE-II manufactured by Kanebo Engineering Company, with an initial load of 0.05 g/d on a 8 cm long sample. The value at 150°C is taken. The stress should be at least 0.08 g/d preferably at least 0.10 g/d. If the thermal contractive stress of the fibre is less than 0.08 g/d it is impossible to obtain a dipped cord with sufficient stress properties.

The fibre according to the invention can be spun by melt spinning under well set conditions. The spinning process comprising the following steps:

1. melting the polyamide 4.6 feed material having an intrinsic viscosity of at least 1.4 in the form of for instance chips in a melt extruder at a set temperature of between 290 and 320°C, preferably about 310°C;

2. spinning through a multiperforated spinneret at a discharge rate of between 5 and 15 m/minute preferably of between 6 and 12 m/min.;

3. passing the spun filaments through a heating cylinder with the temperature set at between 220 and 270°C, preferably at about 250°C;

4. cooling by a cold air stream to solidify;

5. drawing out on a roller at a surface speed of between 200 and 1000 m/min preferably between 250 and 800 m/min and a temperature of between 60 and 100°C, preferably about 80°C;

6. subsequently drawing the drawn-out filament in two or more steps, of which the first step at a temperature of between 60 and 100°C and a drawing ratio of between 1.05 and 1.25, and the second step at a second drawing roller temperature of between 210 and 260°C, to a total drawing ratio of between 4 and 6, preferably between 4.5 and 5.3, and

7. giving a relaxation treatment with a relaxation factor (%) of between 2.5 and 5.0, preferably between 3.0 and 4.0 and a relaxation roller temperature of between 180 and 220°C, preferably of between 185 and 210°C.

This spinning process forms part of the invention. As will be shown in the examples and comparative examples the man skilled in the art should select the optimal conditions through combination of the drawing temperatures and the heating time of the running filaments.

The relaxation heat treatment should be applied, otherwise insufficient intermediate elongation and elongation at break are obtained and thermal shrinkage is too high. Also the temperature of the relaxation heat treatment should not be chosen too high, as well as the relaxation factor, resulting in insufficient thermal contractive stress of the dipped cord. The thermal contractive stress of the cord is also negatively influenced by too high temperatures of the second drawing rollers.

Before the melting step the polyamide feedstock may be (dry) blended or mixed otherwise with stabilizer.

The cord can be produced by standard methods by first twisting the drawn filaments by means of for instance a ring twister, and subsequently twisting two or more of the first twistings into a raw cord.

The raw cord is dipped in a dipping solution by methods known in the art as well as dipping solutions known in the art by the skilled man. A preferred dipping solution is described in JP-A-59082472 and in US-A-4858666.

However it is important that the treatment of the cord after dipping is well-controlled. This treatment consists of passing the dipped cord through

1. a drying zone at a temperature of 130-180°C, preferably 140-170°C during a period of between 30 and 120 sec., preferably of between 40 and 100 seconds. In this drying zone only a very small tension is applied to the cord. For instance 0.05 g/d

2. a curing zone at 200-260°C, preferably 210-250°C, in which the tension applied to the cord is increased to about 1.0 ± 0.2 g/d. The residence time in this zone is of the same order as in the drying zone

3. finally a so-called normalizing zone in which a relaxation heat treatment is given in the same temperature range as in the curing zone during a similar period of time, however the tension of the running cord should be chosen so, that it results in an intermediate elongation of the cord of about 5% (intermediate elongation measured as the elongation at specified load of 2.0 g/d). Normally the tension in the normalizing zone should fall within a range of approximately 0.5-1.5 g/d.

The physical characteristics of the dipped cord are determined by the following methods, after conditioning during 24 hr in an atmosphere of 65% relative humidity and 20°C.

Tenacity by JIS L-1017. For good performance in V-belt reinforcement this value should be at least 7.5 g/d, preferably at least 8.0 g/d. Elongation at break measured by the above mentioned method should at least be 10% preferably at least 13%. In general this value should not be too large as in that case the intermediate elongation will be large, causing disformation of the belt under load. However no problems will arise as long the intermediate elongation of the fibre is at most 9.5%.

The dry thermal shrinkage is measured as the relative increase of the length measured under a load of 0.05 g/d of the cord after it has been given a heat treatment in an oven at 150°C during 30 minutes in unstretched conditions. The length is measured after 4 hours conditioning at 20°C and 65% relative humidity. A good functioning cord requires a dry thermal shrinkage of at most 2.5%, preferably at most 2.0%. If this value is larger, problems will arise during the production of the V-belt, causing the V-belt to deform after cooling, or during running the V-belt may contract too much due to the frictional heat produced and cause damage to the pulley shaft or bearings.

The contractive stress is measured on a 25 cm long dipped cord sample at 150°C in an Instron type FT oven equipped with an Instron type 1120 tensile tester during a period of 10 minutes. The maximum tension value is taken for the calculation of contractive stress, using the actual dimensions of the cord during the measurement. For V-belt reinforcement this values should be at least 0.20 g/d, preferably at least 0.25 g/d. Lower values will cause slipping of the V-belt on the pulley.

In the following examples and comparative examples the invention will be described in more detail, however not being limited thereto.

Spinning of the fibre

After addition of 0.015 % (wt) of cuprous iodide and 0.20 % (wt) of potassium iodide as thermal stabilizers, chips having different intrinsic viscosity have been consequently fed to a 40 mm diameter melt extruder to be molten at a temperature of 320°C and spun at a discharge rate of about 135 g/min through a spinneret having 144 perforations of 0.4 mm diameter bore and 1.6 mm length. The chips consisted of a copolyamide of nylon 46 and nylon 6 (95/5 % (wt)).

The spun filaments were passed through a heating cylinder with 15 cm ID and 20 cm length, held at a temperature of 250°. The temperature is measured 5 cm below the spinneret surface and 2 cm away from the filaments. The cylinder was placed directly below the surface of the spinneret. Thereafter the running filaments were solidified by cooling with air of 18°C. Air speed 0.6 m/sec, in radial direction.

The filaments so obtained were drawn out, after lubricating with approximately 1% of a non aqueous oil from oil feeding rollers, by drawing rollers held at a temperature of 80°C and turning with a surface speed of 800 m/min.

Subsequently, these drawn-out filaments are directly subjected to a first drawing step at a roller temperature of 80° and a draw ratio of 1.10, followed by a second drawing step at a roller temperature of between 210 and 260°C, to reach an overall drawing ratio of 4.51-5.33. Thereafter the fibres were subjected to a relaxation treatment, yielding drawn filaments with a 840 d size.

Changes due to variations in drawing ratio, relaxation factor, etc., were adjusted by changing the discharge rate.

Cord production

Using a ring twister, the filaments were subjected to a 20 turns/10 cm first twisting (in the Z direction); two of these twistings, were consequently subjected to a 15 turns/10 cm final twisting (in the S direction), while doubling them, forming a raw cord. The raw cord was subjected to a dipping treatment using a single dipping machine manufactured by Litzler Company and the dipping solution described below.

After dipping the cord was transferred through the drying zone at 160° C and a set tension of 0.05 g/d during 72 seconds, the curing zone at 230° C and a set tension of 1.0 g/d during 60 sec. and the normalizing zone where for each experiment the tension was set at a value of between 0.5 and 1.5 g/d to result in a intermediate elongation of the cord of about 5%.

Composition of the dipping solution

2.5 mol of formaldehyde (37 % solution) and 0.03 mol caustic soda were mixed per 1 mol of resorcinol and reacted during 6 hr under stirring at room temperature (RF solution).

5.9 parts (solid weight content) vinylpyridine-styrene-butadiene (15 : 15 : 70 mol ratio) based terpolymer latex (tradename Pylatex, manufactured by Sumitomo Naugatuck Co., Ltd., 41% (wt) terpolymer content) were mixed with 1 part (solid content) of RF solution and aged for 20 hr at room temperature (RFL solution containing 20% solid weight). The RFL solution is used for dipping.

The fibres and cords have been characterized by the methods described before. The fatigue behavior of the cords was determined also, by an extension compression fatique test. For this purpose the dipped cord was embedded parallel to the axis in a cylindrically shaped rubber sample. The sample was bended 75 degrees and mounted on an extension-compression fatique tester, and rotated at 850 rpm and internal pressure of 3.5 kg/cm² (compressed air), to record the time (min) until it broke down.

Conditions for the production and test results are given in the following table. Experiment nos. with O mark identify Examples, the other being Comparative Examples

From this table it is clear that the properties of the fibres are decisive for the properties of the dipped cord made therefrom.

T A B L E

| | | 1 | 2 | 3 | 4 | ⑤ | ⑥ | ⑦ | ⑧ | 9 | ⑩ |
|---|---|---|---|---|---|---|---|---|---|---|---|
| Experiment No. | | 1 | 2 | 3 | 4 | ⑤ | ⑥ | ⑦ | ⑧ | 9 | ⑩ |
| Intrinsic viscosity of chip | dl/g | 1.28 | 1.38 | 1.38 | 1.58 | 1.58 | 1.58 | 1.80 | 1.80 | 1.80 | 1.80 |
| Total drawing ratio | — | 4.62 | 4.51 | 4.62 | 4.70 | 4.93 | 5.10 | 5.23 | 5.27 | 5.30 | 5.33 |
| Relaxation factor | % | 1.0 | 4.0 | 1.0 | 6.0 | 4.0 | 4.0 | 4.0 | 3.5 | 0 | 3.0 |
| Second drawing roller temperature | °C | 210 | 260 | 210 | 260 | 260 | 260 | 260 | 230 | 210 | 260 |
| Relaxation roller temperature | °C | 200 | 200 | 200 | 230 | 190 | 200 | 190 | 190 | 160 | 200 |
| **Material filament characteristics** — Intrinsic viscosity | dl/g | 1.25 | 1.31 | 1.30 | 1.46 | 1.46 | 1.47 | 1.65 | 1.64 | 1.63 | 1.64 |
| Tenacity | g/d | 6.13 | 6.42 | 6.64 | 8.16 | 9.01 | 9.10 | 9.23 | 9.24 | 9.35 | 9.41 |
| Intermediate elongation | % | 6.7 | 6.1 | 6.8 | 10.8 | 7.9 | 7.3 | 8.3 | 9.1 | 4.8 | 7.9 |
| Elongation at break | % | 14.7 | 14.0 | 15.2 | 20.3 | 17.9 | 16.6 | 18.4 | 18.6 | 11.5 | 17.8 |
| Dry thermal shrinkage | % | 3.0 | 1.4 | 3.5 | 3.8 | 2.2 | 2.8 | 3.4 | 4.7 | 6.2 | 3.8 |
| Thermal contractive stress | g/d | 0.18 | 0.07 | 0.21 | 0.20 | 0.11 | 0.15 | 0.20 | 0.24 | 0.38 | 0.19 |
| **Dipped cord characteristics** — Elongation when dipped | % | 4.2 | 4.4 | 4.5 | 7.2 | 6.1 | 5.8 | 5.3 | 5.1 | 5.0 | 4.7 |
| Tenacity | g/d | 5.4 | 6.3 | 6.2 | 7.8 | 8.3 | 8.5 | 8.8 | 8.7 | 8.6 | 8.4 |
| Elongation at break | % | 12.1 | 13.1 | 15.6 | 17.6 | 16.9 | 16.8 | 17.5 | 17.7 | 11.2 | 17.0 |
| Dry thermal shrinkage | % | 0.7 | 0.3 | 0.5 | 1.1 | 1.3 | 1.2 | 1.5 | 1.8 | 3.5 | 1.5 |
| Thermal contractive stress | g/d | 0.22 | 0.14 | 0.21 | 0.19 | 0.27 | 0.31 | 0.30 | 0.33 | 0.32 | 0.31 |
| Resistance to fatigue | minute | 93 | 107 | 128 | 130 | 142 | 145 | 168 | 153 | 120 | 162 |

## Claims

1. Polyamide fibre consisting of polyamide 4.6 or a polyamide having tetramethylene adipamide as it main units and satisfying the following characteristics:

a. Intrinsic viscosity (dl/g): at least 1.40

b. Tenacity (g/d): at least 8.0

c. Elongation at break (%): at least 12

d. Elongation at specified load (intermediate elongation) of 3.5 g/d (%): not more than 9.5

e. Dry thermal shrinkage (%): not more than 5

f. Thermal contractive stress (g/d): at least 0.08

and the cord, obtained therefrom, after dipping satisfies:

g-1 Tenacity (g/d): at least 7.5

g-2 Elongation at break (%): at least 10

g-3 Dry thermal shrinkage (%): at most 2.5

g-4 Thermal contractive stress (g/d): at least 0.20.

2. Process for the production of a polyamide 4.6 fibre comprising the following steps:

1. melting the polyamide 4.6 feed material having an intrinsic viscosity of at least 1.4 in the form of for instance chips in a melt extruder at a set temperature of between 290 and 320°C, preferably about 310°C;

2. spinning through a multiperforated spinneret at a discharge rate of between 5 and 15 m/minute preferably of between 6 and 12 m/min.;

3. passing the spun filaments through a heating cylinder with the temperature set at between 220 and 270°C, preferably at about 250°C;

4. cooling by a cold air stream to solidify;

5. drawing out on a roller at a surface speed of between 200 and 1000 m/min preferably between 250 and 800 m/min and a temperature of between 60 and 100°C, preferably about 80°C;

6. subsequently drawing the drawn-out filament in two or more steps, of which the first step at a temperature of between 60 and 100°C and a drawing ratio of between 1.05 and 1.25, and the second step at a second drawing roller temperature of between 210 and 260°C, to a total drawing ratio of between 4 and 6, preferably between 4.5 and 5.3, and

7. giving a relaxation treatment with a relaxation factor (%) of between 2.5 and 5.0, preferably between 3.0 and 4.0 and a relaxation roller temperature of between 180 and 220°C, preferably of between 185 and 210°C.

3. Cord obtainable from the fibre according to claim 1.

4. Reinforced rubber V-belt comprising a reinforcement obtainable from the fibre according to claim 1.

5. Reinforced rubber V-belt comprising a cord according to claim 3.

6. Fibre as described in the description and the examples.

7. Process for the production of a fibre as described in the description and the examples.

8. Cord as described in the description and the examples.